# EUROPEAN PATENT SPECIFICATION

(11) **EP 1 608 715 B1**
(45) Date of publication and mention of the grant of the patent: **19.11.2008**
(21) Application number: 04721517.3
(22) Date of filing: 18.03.2004
(51) Int. Cl.: C09D 167/00, C08G 63/181

(54) **THERMOSETTING POWDER COMPOSITIONS FOR COATINGS**
HEISSHÄRTBARE PULVERZUSAMMENSETZUNGEN FÜR LACKE
COMPOSITIONS EN POUDRE THERMODURCISSABLES POUR REVETEMENTS

(30) Priority: 20.03.2003 EP 03006358
(43) Date of publication of application: 28.12.2005
(73) Proprietor: CYTEC SURFACE SPECIALTIES, S.A., 1070 Bruxelles (BE)
(72) Inventor: MOENS, Luc, B-1640 Sint-Genesius-Rode (BE); BUYSENS, Kris, B-9700 Oudenaarde (BE); MAETENS, Daniel, B-1082 Bruxelles (BE)
(74) Representative: Destryker, Elise Martine
(86) International application number: PCT/EP2004/002801
(87) International publication number: WO 2004/083326

(56) References cited:
- WO-A-94/11451
- US-A- 4 471 108
- US-A1- 2003 023 025
- DATABASE WPI Section Ch, Week 199813 Derwent Publications Ltd., London, GB; Class A23, AN 1998-141178 XP002246648 & JP 10 017794 A (NIPPON ESTER CO LTD) 20 January 1998 (1998-01-20)

## Description

The present invention relates to an isophthalic acid rich carboxyl functionalised polyester, containing linear chain aliphatic (poly)ether diols, and to thermosetting powder compositions comprising a mixture of the polyester with a β-hydroxyalkylamide group containing cross-linking agent.

The invention also relates to the use of said compositions for the preparation of powdered paints and varnishes for the making of coatings and to coatings obtained therewith.

Thermosetting powder compositions are well known in the art and are widely used as paints and varnishes for coating the most various articles. The advantages of these powder coatings are numerous; on the one hand, the problems associated with solvents are completely eliminated, and on the other hand, the powders are used without any loss since only the powder in direct contact with the substrate is retained on the article, the excess powder being, in principle, entirely recoverable and reusable. For these and other reasons, the powder coating compositions are preferred to coating compositions in the form of solutions in organic solvents.

Thermosetting powder compositions have already been widely used in the coating of domestic electrical appliances, automobile industry accessories, and the like. They generally contain a thermosetting organic binder, fillers, pigments, catalysts and various additives used to adapt their properties to their intended use.

There are various types of thermosetting powder compositions. The best known compositions contain either a mixture of carboxyl group-containing polymers, such as a carboxyl group-containing polyester or polyacrylate, and epoxy compounds, such as triglycidyl isocyanurate, glycidyl group-containing acrylic copolymers or β-hydroxyalkylamides or a mixture of hydroxyl group-containing polymers, most often a hydroxyl group-containing polyester, with blocked or non-blocked isocyanates, melamine resins, and the like.

The carboxyl group-containing or the hydroxyl group-containing polyesters suitable for use in the preparation of powdered varnishes and paints have already been described in numerous publications such as articles and patents. These polyesters are usually prepared from aromatic dicarboxylic acids, mainly terephthalic acid and isophthalic acid and optionally a minor proportion of aliphatic or cycloaliphatic dicarboxylic acids, and from various polyols such as ethylene glycol, neopentyl glycol, 1,6-hexanediol, trimethylolpropane, and the like.

These polyesters based on aromatic dicarboxylic acids, when they are used with an appropriate cross-linking agent, provide thermosetting compositions giving paint and varnish coatings possessing good properties, both as regards their appearance and as regards their mechanical properties such as impact resistance, flexibility, etc.

Some of these polyesters and the powders derived from them often are used because of their remarkable weatherability characteristics. These polyesters mostly are derived from isophthalic acid, being the most important acid constituent among others and are commonly used with triglycidyl isocyanurate (TGIC) as the cross-linking agent. Yet, the coatings obtained from these powders, though proving outstanding weatherability, do not have any flexibility at all.

Moreover, TGIC presents problems of health and security. Indeed, TGIC is relatively toxic (Rat Oral LD50 of 0,4 g/kg) and is mutagenic according to the Ames Mutagenicity Test.

As a non toxic alternative to TGIC, β-hydroxyalkylamides β-(HAA) have been used for the cross-linking of powders containing carboxyl-bearing polyesters. But the use of β-(HAA) brings about new problems due to its high reactivity and to the fact that water is liberated during it's reaction with carboxyl groups.

Powder paints comprising as a binder a carboxylic acid group containing polyester and a β-(HAA) group containing cross-linking agent, produce water upon curing, thus creating bubbles in the coating especially when relatively thick layers are applied. Gas bubbles remaining in the coating reduce the adherence and the protective effect of the coating. In order to reduce or even avoid these gas bubbles remaining in the coating, two solutions, being either reducing the melt viscosity of the powder, or slackening the reactivity of the binder system can be envisaged. Yet, incorporation of considerable amounts of plasticising constituents in the binder system often reduces outdoor durability of the cured paint. Besides, from literature it is known that the esterification reaction of a resin acid group with a hydroxyl group of the β-(HAA) group containing hardener neither can be accelerated nor can be slowed down, except from respectively increasing or decreasing the resin acid number along with the stoichiometric amount of the β-(HAA) group containing compound.

Some solutions have been sought for resolving these problems appearing with the use of β-(HAA), and at the same time, for resolving the problems of lack of flexibility of coatings made from powders containing isophthalic-rich polyesters.

EP 649890 claims powder coating compositions comprising a β-(HAA) cross-linking agent and an acid functional polyester having an acid number ranging from 15 through 70 mg KOH/g which is substantially based on dicarboxylic acid units containing 80 to 100% mole of isophthalic acid, on glycols containing at least 50% mole of branched aliphatic glycols with at least 4 carbon atoms, at most 50% mole of a linear aliphatic diol with less than 4 carbon atoms and/or cycloaliphatic diols, 0 to 10% mole of a linear aliphatic diol with at least 4 carbon atoms and on monomers having a functionality of at least three, in an amount of up to 8% mole based on the total amount of dicarboxylic acids and glycols.

As appears from the examples, only a very few powders of this invention gives a good flow on melting, which results in coatings having a poor surface appearance.

A yet sophisticated way to flexibilise thermosetting powder coating compositions derived from carboxyl functional isophthalic acid rich amorphous polyesters is the use of semi-crystalline acid functional polyesters as co-reactable part of the carboxylic acid amorphous resin in a binder along with a polyepoxy compound or a β-(HAA), such as claimed in e.g. WO 91/14745. A careful selection of the proper combination of amorphous and semi-crystalline resins, respectively, enables for flexible and weatherable powder coating compositions derived from carboxyl functional isophthalic acid rich polyesters, as far as particular process conditions for mixing, extrusion and grinding are exercised and appropriate storage conditions of the powder thus obtained, are considered. Anyway, the solution presented in this invention to mix a semi-crystalline acid functional polyesters with a carboxyl functional amorphous polyester represents a technical complication.

In patent application EP 668.895, thermosetting powders are described which comprise a carboxyl group-containing polyester and a β-(HAA). The polyester may comprise isophthalic or terephthalic acid and has a functionality less than 2, obtained by the addition in the polyester of monofunctional acids or alcohols. Due to the low functionality of the polyester, its reactivity is reduced, which brings about a better flow during the melting of the powder on the substrate. Nevertheless, as the polyester has some non-reactive end groups, which do not participate in the cross-linking reaction during the formation of the coating, the latter has a reduced solvent resistance and a reduced flexibility.

In conclusion it can be seen that the various powdered compositions which have been proposed today for outdoor application where an outstanding weatherability along with flexibility is required, and which do not make use of toxic cross-linking agents, all are characterised by one or more drawbacks or limitations. There is thus still a need for powdered thermosetting compositions capable of producing coatings proving an outstanding weatherability and a good flexibility and not exhibiting the shortcomings of prior art.

It now has been surprisingly found that, upon application and curing, the powder coating compositions, comprising the binder of the present invention, - based on a carboxylic acid group containing amorphous isophthalic acid/linear chain aliphatic (poly)ether diol rich polyester in combination with a β-hydroxyalkylamide group containing cross-linking agent - give paint films proving outstanding degassing properties at a film thickness of up to about 200 µm for a curing time of from 15 seconds to 50 minutes at curing temperatures from 140 to 250°C. Moreover, the powdered thermosetting compositions of the invention produce coatings proving very smooth coatings, exhibiting good outdoor durability and flexibility, without any defects possibly originated from volatile compounds.

As used in this specification, the expression "(poly)ether diol" means that these molecules may comprise only one ether group, such as in diethylene glycol, or several ether groups, such as in triethylene glycol.

Thus, the present invention relates to a carboxylic acid group containing amorphous polyester having an acid number of from 12 to 50 mg KOH/g and prepared from a polyacid constituent comprising from 85 to 100% mole of isophthalic acid and from 0 to 15% mole of another aliphatic, cycloaliphatic or aromatic polyacid, and of a polyol constituent comprising from 5 to 40% mole of one or more linear chain aliphatic (poly)ether diol, from 60 to 95% mole of neopentyl glycol and from 0 to 30 % mole of another aliphatic and/or cycloaliphatic polyol.

The carboxyl functional amorphous polyester of the present invention is preferably further characterised by:
- a number averaged molecular weight ranging from 2500 to 8600, more preferably from 3300 to 7500 as measured by gel permeation chromatography (GPC)
- a glass transition temperature Tg from 40 to 80°C and more preferably from 56 to 70°C as measured by differential scanning calorimetry (DSC) according to ASTM D3418 with a heating gradient of 20°C per minute
- an ICI (cone/plate) viscosity accordingly to ASTM D4287, measured at 200°C ranging from 5 to 15000 mPa.s

The acid constituent of the amorphous polyester according to the present invention, is for 85 to 100% mole composed of isophthalic acid and for 0 to 15% mole of another polyacid constituent selected from one or more aliphatic, cycloaliphatic or aromatic polyacids, such as fumaric acid, maleic acid, phthalic acid, terephthalic acid, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azelaic acid, sebacic acid, 1,12-dodecanedioic acid, trimellitic acid, pyromellitic acid, and the corresponding anhydrides.

The polyol constituent of the amorphous polyester according to the present invention, is for 5 to 40% mole composed of a linear chain aliphatic (poly)ether diol such as diethylene glycol, dipropylene glycol, triethylene glycol and tripropylene glycol, used in a mixture or alone. The polyol constituent of this polyester also comprises 60 to 95% mole of neopentyl glycol and for 0 to 30% mole and preferably for 0 to 20% mole of another polyol constituent selected from one or more aliphatic or cycloaliphatic polyol such as ethylene glycol, propylene glycol, 1,6-hexanediol, 1,4-cyclohexanediol, 1,4-cyclohexanedimethanol, hydrogenated Bisphenol A, 2-methyl-1,3-propanediol, 2-butyl-2-ethyl-1,3-propanediol, neopentyl glycol hydroxypivalate, trimethylolpropane, ditrimethylolpropane, pentaerythrytol, etc.

Preferably, neopentyl glycol hydroxypivalate is not used as polyol in the amorphous polyester according to the present invention.

Preferably, the polyester according to the present invention is composed of polycarboxylic acid units containing from 85 to 100% mole of isophthalic acid, from 0 to 15% mole of terephthalic acid and/or 1,4-cyclohexanedicarboxylic acid, and of polyol constituents containing from 5 to 40% mole of linear chain aliphatic (poly)ether diol, preferably diethylene glycol, from 60 to 95% mole of neopentyl glycol and from 0 to 30% mole of ethylene glycol, propylene glycol, 1,6-hexanediol, trimethylolpropane or pentaerythrytol.

The carboxylic acid group containing amorphous polyester, according to the present invention, is usually prepared using conventional esterification techniques well known in the art. The polyester is generally prepared according to a procedure consisting of one or more reaction steps.

The esterification conditions generally used to prepare the polyesters are conventional, namely a standard esterification catalyst, such as dibutyltin oxide, dibutyltin dilaurate, n-butyltin trioctoate, sulphuric acid or a sulphonic acid, tetraisopropyl titanate or tetra-n-butyl titanate can be used in an amount from 0.05 to 1.50% by weight of the reactants and optionally, colour stabilisers, for example, phenolic antioxidants such as Irganox 1010 (Ciba) or phosphonite- and phosphite-type stabilisers such as tributylphosphite, can be added in an amount from 0 to 1% by weight of the reactants.

Polyesterification is generally carried out at a temperature which is gradually increased from 130°C to about 190 to 250°C, first under normal pressure, then, when necessary, under reduced pressure at the end of each process step, while maintaining these operating conditions until a polyester is obtained, which has the desired hydroxyl and/or acid number. The degree of esterification is generally followed by determining the amount of water formed in the course of the reaction and the properties of the obtained polyester, for example the hydroxyl number, the acid number, the molecular weight or the viscosity.

The present invention also relates to powdered thermosetting compositions for coatings, characterised in that they comprise:
a) a carboxylic acid group containing amorphous polyester as defined above, and
b) a cross-linking agent having at least two β-hydroxyalkylamide groups.

The carboxyl group containing amorphous polyester, as described above, is part of a binder system along with a β-hydroxyalkylamide group containing cross-linking agent, in the preparation of powder coating compositions for use as paint or clear lacquer.

It has been found that polyesters containing more than 85% mole of isophthalic acid, along with the other constituents of the polyester, give especially good coatings when crosslinked with β-(HAA).

Suitable β-hydroxyalkylamide cross-linking agents are those which contain at least two bis(β-hydroxyalkyl)amide groups. Commercial products are available, such as N,N,N',N'-tetrakis-(2-hydroxyethyl)-adipamide, known under the tradename Primid XL-552 and N,N,N',N'-tetrakis-(2-hydroxypropyl)-adipamide, known under the tradename Primid QM1260 for example. Other β-hydroxyalkylamide are described in the literature, for example those mentioned in the patents US-A-4727111, US-A-4788255, US-A-4076917, or in the patent applications EP-A-322834 and EP-A-473380.

The β-hydroxyalkylamide group containing cross-linking agent described herein above is generally used in an amount from 0.25 to 1.40 preferably from 0.60 to 1.05 equivalent of carboxyl group present in the amorphous polyester per equivalent of β-hydroxyalkyl groups.

The amount of cross-linking agent in the powdered thermosetting compositions according to the present invention is generally from 1 to 10 % by weight relative to the weight of the carboxylic acid containing amorphous polyester.

The powdered thermosetting compositions for coatings according to the present invention preferably contain less than 5% by weight of semi-crystalline polyester. The powdered thermosetting compositions for coatings according to the present invention more preferably contain no semi-crystalline polyester.

In addition to the essential components described above, compositions within the scope of the present invention can also include flow control agents such as Resiflow PV5 (Worlee), Modaflow (Monsanto), Acronal 4F (BASF), etc., and degassing agents such as benzoin (BASF) etc. To the formulation UV-light absorbers such as Tinuvin 900 (Ciba), hindered amine light stabilisers represented by Tinuvin 144 (Ciba), other stabilising agents such as Tinuvin 312 and 1130 (Ciba), antioxidants such as Irganox 1010 (Ciba) and stabilisers from the phosphonite or phosphite type can be added.

Both, pigmented systems as well as clear lacquers can be prepared.

A variety of dyes and pigments can be utilised in the composition of this invention. Examples of useful pigments and dyes are: metallic oxides such as titaniumdioxide, ironoxide, zincoxide and the like, metal hydroxides, metal powders, sulphides, sulphates, carbonates, silicates such as ammoniumsilicate, carbon black, talc, china clay, barytes, iron blues, leadblues, organic reds, organic maroons and the like.

The coating compositions according to the present invention generally comprise:
- from 50 to 98 weight % of carboxylic acid group containing amorphous polyester
- from 1 to 10 weight % of β-hydroxyalkylamide cross-linking agent
- from 0 to 10 weight % of one or more UV light absorbers, stabilisers, flow control agents, degassing agents
- from 0 to 49 weight % pigments and/or dyes.

The components of the composition according to the invention may be mixed by dry blending in a mixer or blender (e.g. drum mixer). The premix is then homogenised at temperatures ranging from 70 to 150°C in a single screw extruder such as the BUSS-Ko-Kneter or a double screw extruder such as the PRISM or APV. The extrudate, when cooled down, is grounded to a powder with a particle size ranging from 10 to 150 µm. The powdered composition may be deposited on the substrate by use of a powder gun such as an electrostatic CORONA gun or TRIBO gun. On the other hand, well-known methods of powder deposition such as the fluidised bed technique can be used. After deposition the powder is heated to a temperature between 140 and 250°C, causing the particles to flow and fuse together to form a smooth, uniform, continuous, uncratered coating on the substrate surface.

The following examples are submitted for a better understanding of the invention without being restricted thereto.

### Example 1

A mixture of 357.0 parts of neopentyl glycol, 63.2 parts of diethylene glycol and 8.8 parts of trimethylolpropane are placed in a conventional four neck round bottom flask equipped with a stirrer, a distillation column connected to a water cooled condenser, an inlet for nitrogen and a thermometer attached to a thermoregulator. The flask contents are heated, while stirring under nitrogen, to a temperature of circa 130°C at which point 715.5 parts of isophthalic acid and 2.5 parts of n-butyltintrioctoate are added. The heating is continued gradually to a temperature of 230°C. Water is distilled from the reactor from 180°C on. When distillation under atmospheric pressure stops,1.0 part of tributylphosphite is added and a vacuum of 50 mm Hg is gradually applied. After three hours at 230°C and 50 mm Hg, following characteristics are obtained:

| | |
|---|---|
| AN | 19 mg KOH/g |
| OHN | 3 mg KOH/g |
| ICI^{200°C} (cone/plate) | 6000 mPa.s |
| Tg (DSC, 20°/min) | 56°C |

### Example 2

Adopting the procedure of Example 1, another polyester is made using 718.8 parts isophthalic acid, 360.4 parts neopentyl glycol and 63.6 parts diethylene glycol. The obtained polyester has following characteristics:

| | |
|---|---|
| AN | 31 mg KOH/g |
| ICI^{200°C} (cone/plate) | 1500 mPa.s |
| Tg (DSC, 20°/min) | 56°C |

### Example 3:

The polyesters as illustrated above, are then formulated to a powder accordingly to one of the formulations as mentioned below.

| Formulation A White paint formulation | | Formulation B Brown paint formulation | |
|---|---|---|---|
| Binder | 69.06 | Binder | 78.33 |
| Kronos 2310 | 29.60 | Bayferrox 130 | 4.44 |
| Resiflow PV5 | 0.99 | Bayferrox 3950 | 13.80 |
| Benzoin | 0.35 | Carbon Black FW2 | 1.09 |
| | | Resiflow PV5 | 0.99 |
| | | Benzoin | 0.35 |

The powders are prepared first by dry blending of the different components and then by homogenisation in the melt using a PRISM 16 mm L/D 15/1 twin screw extruder at an extrusion temperature of 85°C. The homogenised mix is then cooled and grinded in an Alpine. Subsequently the powder is sieved to obtain a particle size between 10 and 110 µm. The powder thus obtained is deposited on cold rolled steel with a thickness of 0.8 mm, by electrostatic deposition using the GEMA - Volstatic PCG 1 spraygun. At a film thickness of about 80 µm the panels are transferred to an air-ventilated oven, where curing proceeds for 15 minutes at a temperature of 200°C. The paint characteristics for the finished coatings obtained from the polyesters of the present invention (Ex. 1 and 2) as well as from two commercial polyesters, Crylcoat 7617 and Crylcoat 7642, standard -Primid XL552 (95/5)- resins for respectively outdoor and superdurable applications, and illustrated by way of comparison, are given in table1. Crylcoat 7617 is mainly composed of terephthalic acid and neopentyl glycol and has an AN of 30 mg KOH/g. Crylcoat 7642 is purely composed of isophthalic acid and neopentyl glycol and has an AN of 35 mg KOH/g.

In this table:
- Column 1 :: indicates the identification number of the formulation
- Column 2 :: indicates the type of formulation
A = white (RAL9010)
B = medium brown (RAL8014)
- Column 3 :: indicates the type and quantity of the polyester resin used in the formulation
- Column 4 :: indicates the type and quantity of β-hydroxyalkylamide cross-linker :
XL552 = Primid XL552 (EMS) = N,N,N',N'-tetrakis-(2-hydroxyethyl)-adipamide
- Column 5 :: indicates the 60° gloss, measured according to ASTM D523
- Column 6 :: indicates the direct impact strength according to ASTM D2794. The highest impact which does not crack the coating is recorded in kg.cm.
- Column 7 :: indicates the reverse impact strength according to ASTM D2794. The highest impact which does not crack the coating is recorded in kg.cm.
- Column 8 :: indicates the Erichsen slow embossing according to ISO 1520. The highest penetration which does not crack the coating is recorded in mm.
- Column 9 :: indicates the aspect of the coating
g = very smooth mirror-like finish
m = orange peel

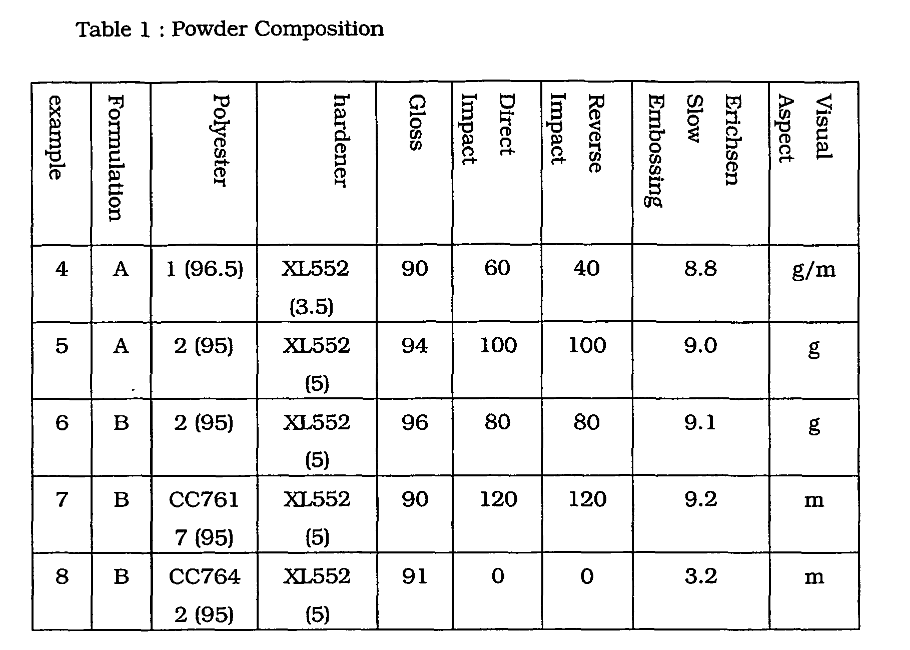

As clearly appears from table 2, the powders according to the present invention (Ex. 4 to 6) thus prove to satisfy a combination of properties, such as flexibility and gloss. They all give coatings with a very good surface aspect, comparable to nowadays standard outdoor powders (Comparative example 7). As clearly appears from comparative example 8 no flexibility is obtained for a coating based on a β-hydroxyalkylamide hardener and a carboxyl group containing isophthalic-rich polyester where no linear chain aliphatic (poly)ether diol is used

Moreover it has been proven that polyester resins answering a composition as claimed in this invention, allow for paint coating without any defects or pinholing at a thickness of up to 200 µm. Thus, powder formulations answering the examples 4 to 6, allow for paint films of 200 µm with outstanding flow and without showing any pinhole or other defect.

As clearly appears from table 1, powder compositions according to the present invention containing as a binder a combination of the carboxyl functional polyester according to the present invention along with a β-hydroxyalkylamide cross-linking agent, prove upon application and curing an unique combination of properties such as a good flexibility, outstanding flow and gloss.

Besides an outstanding flexibility, flow and degassing properties, the powder coating compositions of the present invention prove to satisfy an excellent outdoor resistance comparable to or better than the currently used nowadays commercial polyester based powders.

In table 2, the relative 60° gloss values, recorded every 400 hours, according to ASTM D523, is reported for the coating obtained from example 6, according to the invention, and submitted to the Q-UV accelerated weathering test. In the same table are given, by way of comparison, the weathering results for the coatings obtained from example 7 and 8, derived from commercial resins.

**Table 2**

| | UV-A (340 nm, I = 0.77 W/m²/nm | | |
|---|---|---|---|
| Hours | Ex. 6 | Ex. 7 | Ex. 8 |
| 0 | 100 | 100 | 100 |
| 400 | 99 | 99 | 99 |
| 800 | 97 | 88 | 99 |
| 1200 | 98 | 74 | 97 |
| 1600 | 97 | 69 | 97 |
| 2000 | 100 | 63 | 95 |
| 2400 | 100 | 26 | 92 |
| 2800 | 100 | | 86 |
| 3200 | 97 | | 80 |
| 3600 | 92 | | 80 |
| 4000 | 85 | | 73 |
| 4400 | 77 | | 76 |
| 4800 | 68 | | 69 |
| 5200 | 59 | | 75 |
| 5600 | 51 | | 66 |
| 6000 | 43 | | 60 |
| 6400 | | | 54 |
| 6800 | | | 57 |
| 7200 | | | 71 |
| 7600 | | | 66 |
| 8000 | | | 50 |
| 8400 | | | 50 |
| 8800 | | | 47 |
| 9200 | | | 45 |
| 9600 | | | 43 |
| 10000 | | | 41 |
| 10400 | | | 39 |
| 10800 | | | 35 |
| 11200 | | | 33 |
| 11600 | | | 30 |

## Claims

1. A carboxylic acid group containing amorphous polyester having an acid number of from 12 to 50 mg KOH/g and prepared from a polyacid constituent comprising from 85 to 100% mole of isophthalic acid and from 0 to 15% mole of another aliphatic, cycloaliphatic or aromatic polyacid, and of a polyol constituent comprising from 5 to 40% mole of one or more linear chain aliphatic (poly)ether diol, from 95 to 60% mole of neopentyl glycol and from 0 to 30 % mole of another aliphatic and/or cycloaliphatic polyol.

2. The carboxylic acid group containing polyester according to claim 1, which is **characterised by**
- a number averaged molecular weight ranging from 2500 to 8600, preferably from 3300 to 7500 as measured by gel permeation chromatography (GPC)
- a glass transition temperature Tg from 40 to 80°C and preferably from 56 to 70°C as measured by differential scanning calorimetry (DSC) according to ASTM D3418 with a heating gradient of 20°C per minute
- an ICI (cone/plate) viscosity accordingly to ASTM D4287, measured at 200°C ranging from 5 to 15000 mPa.s

3. The carboxylic acid group containing polyester according to claim 1 or 2, **characterised in that** the 0 to 15% mole of the aliphatic, cycloaliphatic or aromatic polyacids, other than isophthalic acid is selected from fumaric acid, maleic acid, phthalic acid, terephthalic acid, 1,4-cyclohexanedicarboxylic acid, 1,3-cyclohexanedicarboxylic acid, 1,2 -cyclohexanedicarboxylic acid, succinic acid, adipic acid, glutaric acid, pimelic acid, suberic acid, azelaic acid, sebacic acid, 1,12-dodecanedioic acid, trimellitic acid, pyromellitic acid, and the corresponding anhydrides.

4. The carboxylic acid group containing polyester according to any of claims 1 to 3, **characterised in that** the 5 to 40% mole of linear chain aliphatic (poly)ether diols are selected from diethylene glycol, dipropylene glycol, triethylene glycol and tripropylene glycol, used in a mixture or alone, and **in that** the 0 to 30% mole of the other aliphatic and/or cycloaliphatic diol is selected from ethylene glycol, propylene glycol, 1,6-hexanediol, 1,4-cyclohexanediol, 1,4-cyclohexanedimethanol, hydrogenated Bisphenol A, 2-methyl-1,3-propanediol, 2-butyl-2-ethyl-1,3-propanediol, neopentyl glycol hydroxypivalate, trimethylolpropane, ditrimethylolpropane and pentaerythrytol, used in a mixture or alone.

5. The carboxylic acid group containing polyester according to any of claims 1 to 4, **characterised in that** it is composed of a polyacid constituent comprising from 85 to 100% mole of isophthalic acid and from 0 to 15% mole of terephthalic acid and /or 1,4-cyclohexanedicarboxylic acid and of a polyol constituent comprising from 5 to 40% mole of linear chain aliphatic (poly)ether diol, preferably diethylene glycol, from 60 to 95% mole of neopentyl glycol and from 0 to 30% mole of ethylene glycol, propylene glycol, 1,6-hexanediol, trimethylolpropane or pentaerythrytol.

6. Powdered thermosetting compositions, **characterised in that** they comprise:
a) a carboxylic acid group containing amorphous polyester according to any of the preceding claims,
b) a cross-linking agent having at least two β-hydroxyalkylamide groups.

7. Powdered thermosetting compositions according to claim 6, comprising:
- from 50 to 98 weight % of carboxylic acid group containing amorphous polyester
- from 1 to 10 weight % of β-hydroxyalkylamide cross-linking agent
- from 0 to 10 weight % of one or more UV light absorbers, stabilisers, flow control agents, degassing agents
- from 0 to 49 weight % pigments and/or dyes.

8. Process for coating an article, **characterised in that** powdered thermosetting compositions for coatings according to any of claims 6 to 7 is applied by an electrostatic or friction charging gun, or in a fluidised bed, and **in that** the coating thus obtained is heated at a temperature of from 140 to 250°C.

9. Substrate entirely or partially coated by the process of claim 8.

## Patentansprüche

1. Carbonsäuregruppen enthaltender amorpher Polyester, der eine Säurezahl von 12 bis 50 mg KOH/g hat und aus einer Polysäurekomponente, umfassend 85 bis 100 mol-% Isophthalsäure und 0 bis 15 mol-% einer weiteren aliphatischen, cycloaliphatischen oder aromatischen Polysäure, und aus einer Polyolkomponente, umfassend 5 bis 40 mol-% von einem oder mehreren geradkettigen aliphatischen (Poly)etherdiol(en), 95 bis 60 mol-% Neopentylglycol und 0 bis 30 mol-% eines weiteren aliphatischen und/oder cycloaliphatischen Polyols, hergestellt ist.

2. Carbonsäuregruppen enthaltender Polyester nach Anspruch 1, welcher durch
- ein zahlenmittleres Molekulargewicht im Bereich von 2.500 bis 8.600, vorzugsweise 3.300 bis 7.500, gemessen durch Gelpermeationschromatographie (GPC),
- eine Glasübergangstemperatur Tg von 40 bis 80 °C und vorzugsweise 56 bis 70 °C, gemessen durch Differentialscanningkalorimetrie (DSC) gemäß ASTM D3418 mit einem Erwärmungsgradienten von 20 °C pro Minute,
- eine ICI- (Kegel/Platte-) Viskosität gemäß ASTM D4287, gemessen bei 200 °C, im Bereich von 5 bis 15.000 mPa · s
**gekennzeichnet** ist.

3. Carbonsäuregruppen enthaltender Polyester nach Anspruch 1 oder 2, **dadurch gekennzeichnet, daß** die 0 bis 15 mol-% der aliphatischen, cycloaliphatischen oder aromatischen Polysäuren, die nicht Isophthalsäure sind, aus Fumarsäure, Maleinsäure, Phthalsäure, Terephthalsäure, 1,4-Cyclohexandicarbonsäure, 1,3-Cyclohexandicarbonsäure, 1,2-Cyclohexandicarbonsäure, Bernsteinsäure, Adipinsäure, Glutarsäure, Pimelinsäure, Korksäure, Azelainsäure, Sebacinsäure, 1,12-Dodecandisäure, Trimellithsäure, Pyromellithsäure und den entsprechenden Anhydriden ausgewählt sind.

4. Carbonsäuregruppen enthaltender Polyester nach einem der Ansprüche 1 bis 3, **dadurch gekennzeichnet, daß** die 5 bis 40 mol-% der geradkettigen aliphatischen (Poly)etherdiole aus Diethylenglycol, Dipropylenglycol, Triethylenglycol und Tripropylenglycol, verwendet in einem Gemisch oder allein, ausgewählt sind, und daß die 0 bis 30 mol-% des anderen aliphatischen und/oder cycloaliphatischen Diols aus Ethylenglycol, Propylenglycol, 1,6-Hexandiol, 1,4-Cyclohexandiol, 1,4-Cyclohexandimethanol, hydriertem Bisphenol A, 2-Methyl-1,3-propandiol, 2-Butyl-2-ethyl-1,3-propandiol, Neopentylglycolhydroxypivalat, Trimethylolpropan, Ditrimethylolpropan und Pentaerythritol, verwendet in einem Gemisch oder allein, ausgewählt sind.

5. Carbonsäuregruppen enthaltender Polyester nach einem der Ansprüche 1 bis 4, **dadurch gekennzeichnet, daß** er aus einer Polysäurekomponente, umfassend 85 bis 100 mol-% Isophthalsäure und 0 bis 15 mol-% Terephthalsäure und/oder 1,4-Cyclohexandicarbonsäure, und einer Polyolkomponente, umfassend 5 bis 40 mol-% eines geradkettigen aliphatischen (Poly)-etherdiols, vorzugsweise Diethylenglycol, 60 bis 95 mol-% Neopentylglycol und 0 bis 30 mol-% Ethylenglycol, Propylenglycol, 1,6-Hexandiol, Trimethylolpropan oder Pentaerythritol, besteht.

6. Pulverförmige hitzehärtbare Zusammensetzungen, **dadurch gekennzeichnet, daß** sie:
a) einen Carbonsäuregruppen enthaltenden amorphen Polyester nach einem der vorhergehenden Ansprüche,
b) ein Vernetzungsmittel mit mindestens zwei β-Hydroxyalkylamidgruppen umfassen.

7. Pulverförmige hitzehärtbare Zusammensetzungen nach Anspruch 6, umfassend:
- 50 bis 98 Gew.-% eines Carbonsäuregruppen enthaltenden amorphen Polyesters,
- 1 bis 10 Gew.-% β-Hydroxyalkylamidvernetzungsmittel,
- 0 bis 10 Gew.-% von einem oder mehreren UV-Lichtabsorbern, Stabilisatoren, Fließkontrollmitteln, Entgasungsmitteln,
- 0 bis 49 Gew.-% Pigmente und/oder Farbstoffe.

8. Verfahren zur Beschichtung eines Gegenstandes, **dadurch gekennzeichnet, daß** pulverförmige hitzehärtbare Zusammensetzungen für Beschichtungen nach einem der Ansprüche 6 bis 7 durch eine Pistole mit elektrostatischer oder Reibungsladung oder in einem Fließbett aufgebracht werden, und daß die so erhaltene Beschichtung bei einer Temperatur von 140 bis 250 °C erhitzt wird.

9. Substrat, vollständig oder teilweise durch das Verfahren von Anspruch 8 beschichtet.

## Revendications

1. Polyester amorphe contenant un groupe acide carboxylique, ayant un indice d'acide de 12 à 50 mg de KOH/g et préparé à partir d'un constituant polyacide comprenant de 85 à 100 % en moles d'acide isophtalique et de 0 à 15 % en moles d'un autre polyacide aliphatique, cycloaliphatique ou aromatique, et d'un constituant polyol comprenant de 5 à 40 % en moles d'un ( poly )éther diol aliphatique en chaîne linéaire ou de plusieurs poly( éther ) diols aliphatiques en chaîne linéaire, de 95 à 60 % en moles de néopentyl glycol et de 0 à 30 % en moles d'un autre polyol aliphatique et/ou cycoaliphatique.

2. Polyester contenant un groupe acide carboxylique suivant la revendication 1, qui est **caractérisé par**
- une masse moléculaire moyenne en nombre allant de 2500 à 8600, de préférence de 3300 à 7500, telle que mesurée par chromatographie de perméation de gel ( GPC )
- un point de transition à l'état vitreux Tg allant de 40 à 80°C et, de préférence, de 56 à 70°C, tel que mesuré par analyse calorimétrique différentielle ( DSC ) suivant ASTM D3418 en ayant un gradient de chauffage de 20°C à la minute
- une viscosité ICI ( cône/plaque ) suivant ASTM D4287, mesurée à 200°C, allant de 5 à 15 000 mPa.s.

3. Polyester contenant un groupe acide carboxylique suivant la revendication 1 ou 2, **caractérisé en ce que** de 0 à 15 % en moles des polyacides aliphatiques, cycloaliphatiques ou aromatiques, autres que l'acide isophtalique, sont choisis parmi l'acide fumarique, l'acide maléique, l'acide phtalique, l'acide téréphtalique, l'acide 1,4-cyclohexanedicarboxylique, l'acide 1,3-cyclohexanedicarboxylique, l'acide 1,2-cyclohexanedicarboxylique, l'acide succinique, l'acide adipique, l'acide glutarique, l'acide pimélique, l'acide subérique, l'acide azélaïque, l'acide sébacique, l'acide 1,12-dodécanedioïque, l'acide trimellitique, l'acide pyromellitique et les anhydrides correspondants.

4. Polyester contenant un groupe acide carboxylique suivant l'une quelconque des revendications 1 à 3, **caractérisé en ce que** les 5 à 40 % en moles de ( poly )éther diols aliphatiques à chaîne linéaire sont choisis parmi le diéthylène glycol, le dipropylène glycol, le triéthylène glycol et le tripropylène glycol, utilisés en mélange ou seuls, et **en ce que** les 0 à 30 % en moles de l'autre diol aliphatique et/ou cycloaliphatique sont choisis parmi l'éthylène glycol, le propylène glycol, le 1,6-hexanediol, le 1,4-cyclohexanediol, le 1,4-cyclohexanediméthanol, le bisphénol A hydrogéné, le 2-méthyl-1,3-propanediol, le 2-butyl-2-éthyl-1,3-propanediol, l'hydroxypivalate de néopentyl glycol, le triméthylolpropane, le ditriméthylolpropane et le pentaérythrite, utilisés en mélange ou seuls.

5. Polyester contenant un groupe acide carboxylique suivant l'une quelconque des revendications 1 à 4, **caractérisé en ce qu'**il est composé d'un constituant polyacide comprenant de 85 à 100 % en moles d'acide isophtalique et de 0 à 15 % en moles d'acide téréphtalique et/ou d'acide 1,4-cyclohexanedicarboxylique et d'un constituant polyol comprenant de 5 à 40 % en moles d'un ( poly )éther diol aliphatique en chaîne linéaire, de préférence de diéthylène glycol, de 60 à 95 % en moles de néopentyl glycol et de 0 à 30 % en moles d'éthylène glycol, de propylène glycol, de 1,6-hexanediol, de triméthylolpropane ou de pentaérythrite.

6. Compositions thermodurcissables en poudre, **caractérisées en ce qu'**elles comprennent :
a ) un polyester amorphe contenant un groupe acide carboxylique suivant l'une quelconque des revendications précédentes,
b ) un agent de réticulation ayant au moins deux groupes β-hydroxyalcoylamide.

7. Compositions thermodurcissables en poudre suivant la revendication 6, comprenant :
- de 50 à 98 % en poids de polyester amorphe contenant un groupe acide carboxylique
- de 1 à 10 % en poids de β-hydroxyalcoylamide en tant qu'agent de réticulation
- de 0 à 10 % en poids d'un ou de plusieurs agents absorbant la lumière UV, agents de stabilisation, agents de réglage de l'écoulement, agents de dégazage,
- de 0 à 49 % en poids de pigments et/ou de colorants.

8. Procédé pour revêtir un objet, **caractérisé en ce que** l'on applique des compositions thermodurcissables en poudre pour des revêtements suivant l'une quelconque des revendications 6 à 7 par un pistolet de chargement électrostatique ou par frottement, ou dans un lit fluidisé, et **en ce que** l'on porte le revêtement ainsi obtenu à une température de 140 à 250°C.

9. Substrat revêtu en tout ou partie par le procédé de la revendication 8.
